# EUROPÄISCHE PATENTSCHRIFT

(11) **EP 1 796 461 B1**
(45) Veröffentlichungstag und Bekanntmachung des Hinweises auf die Patenterteilung: **29.12.2010**
(21) Anmeldenummer: 05784806.1
(22) Anmeldetag: 03.09.2005
(51) Int. Cl.: A01N 43/40, A01N 25/02

(54) **FLÜSSIGE PFLANZENSCHUTZFORMULIERUNGEN ENTHALTEND DIFLUFENICAN**
LIQUID PLANT PROTECTION FORMULATION COMPRISING DIFLUFENICAN
FORMULATIONS PHYTOSANITAIRES LIQUIDES CONTENANT DU DIFLUFENICAN

(30) Priorität: 18.09.2004 DE 102004045371
(43) Veröffentlichungstag der Anmeldung: 20.06.2007
(73) Patentinhaber: Bayer CropScience GmbH, 65929 Frankfurt/Main (DE)
(72) Erfinder: SCHNABEL, Gerhard, 63820 Elsenfeld (DE); HAASE, Detlev, 65929 Frankfurt a.M. (DE)
(86) Internationale Anmeldenummer: PCT/EP2005/009505
(87) Internationale Veröffentlichungsnummer: WO 2006/029736

(56) Entgegenhaltungen:
- WO-A-01/01777
- WO-A-95/15685
- WO-A-98/48624
- WO-A-2005/036962

## Beschreibung

Die vorliegende Erfindung betrifft das Gebiet der Pflanzenschutzformulierungen. Insbesondere betrifft sie flüssige Formulierungen, in denen der Wirkstoff Diflufenican in gelöster Form vorliegt.

Flüssige Formulierungen von agrochemischen Wirkstoffen sind dem Fachmann bekannt. Auch für das Herbizid Diflufenican sind flüssige Formulierungen, z.B. als wässriges Suspensionskonzentrat (SC) oder emulgierbares Konzentrat (EC), Handelsname z.B. First®, gut bekannt. WO 2005/036962 A1 beschreibt flüssige Pflanzenschutzmittel enthaltend Diflufenican und Säureamide als Lösungsmittel, worin die genannten Säureamide aus der Gruppe der niederen Alkansäuren umfassend Ameisen-, Essig-, Propion- und Buttersäuren stammen. WO 1998/48624 A1 offenbart flüssige Pflanzenschutzmittel enthaltend Diflufenican und ein (C1-C4)-Alkylpyrrolidinon als Lösungsmittel. WO 2001/001777 A1 beschreibt flüssige Pflanzenschutzmittel enthaltend Diflufenican und Fettsäureester als Lösungsmittel.

Die bekannten Diflufenican enthaltenden flüssigen EC-Formulierungen haben jedoch den Nachteil, daß sie nicht immer lagerstabil sind. So kann beispielsweise der Wirkstoff in der Spritzbrühe auskristallisieren und dadurch ein Verstopfen der Düsen verursachen. Ein weiterer Nachteil dieser bekannten Formulierungen besteht darin, daß sie das toxikologisch bedenkliche Lösungsmittel N-Methyl-pyrrolidinon enthalten. Die Verwendung von N-Methyl-pyrrolidinon als Lösungsmittel in Formulierungen von Pflanzenschutzmitteln ist nicht mehr erwünscht.

Die Aufgabe der vorliegenden Erfindung bestand darin, eine flüssige Formulierung enthaltend Diflufenican bereit zu stellen, die lagerstabil und anwendungsfreundlich ist und kein N-Methyl-pyrrolidinon enthält.

Diese Aufgabe wurde durch Bereitstellung einer flüssigen Formulierung von Diflufenican gelöst, die bestimmte Carbonsäureamide und Lösungsmittel enthält, und in der Diflufenican in gelöster Form vorliegt.

Ein Gegenstand vorliegender Erfindung sind flüssige Pflanzenschutzformulierungen enthaltend
a) 0,1 bis 8% Diflufenican in gelöster Form,
b) 1 bis 80% eines Lösungsmittels, das sowohl polare als auch unpolare Gruppen besitzt, oder eines Gemisches aus solchen Lösungsmitteln,
c) 1 bis 30% eines Tensids oder Tensidgemischs,
d) 0 bis 70% eines oder mehreren weiterer agrochemische Wirkstoffe,
e) 0 bis 50% eines unpolaren Lösungsmittels,
f) 0 bis 15% eines dipolaren Lösungsmittels, und
g) 0 bis 20% eines oder mehreren weiterer Hilfsstoffe.

Unter einem Lösungsmittel der Gruppe b), das sowohl polare als auch unpolare Gruppen besitzt, sind Fettsäuredialkylamide der Formel (I) zu verstehen. 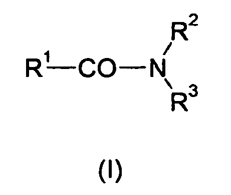
R¹ bedeutet jeweils durch k Reste aus der Gruppe Hydroxy und CO₂-(C₁-C₄)-Alkyl substituiertes (C₆-C₃₂)-Alkyl, (C₆-C₃₂)-Alkenyl oder (C₆-C₃₂)-Alkinyl;
R² bedeutet Wasserstoff oder jeweils durch k Reste aus der Gruppe Hydroxy und CO₂-(C₁-C₄)-Alkyl substituiertes (C₁-C₂₀)-Alkyl , (C₂-C₂₀)-Alkenyl oder (C₂-C₂₀)-Alkinyl;
R³ bedeutet Wasserstoff oder jeweils durch k Reste aus der Gruppe Hydroxy und CO₂-(C₁-C₄)-Alkyl substituiertes (C₁-C₂₀)-Alkyl, (C₂-C₂₀)-Alkenyl oder (C₂-C₂₀)-Alkinyl;
k bedeutet 0, 1, 2 oder 3.

Bevorzugt sind die Fettsäuredialkylamide der Formel (I), worin
R¹ bedeutet (C₆-C₂₀)-Alkyl, (C₆-C₂₀)-Alkenyl oder (C₆-C₂₀)-Alkinyl;
R² bedeutet Wasserstoff, (C₁-C₆)-Alkyl, CH₂CH₂OH oder durch den Rest CO₂R⁷ einfach substituiertes (C₁-C₄)-Alkyl;
R³ bedeutet Wasserstoff, (C₁-C₆)-Alkyl, CH₂CH₂OH oder durch den Rest CO₂R⁷ einfach substituiertes (C₁-C₄)-Alkyl,
R⁷ bedeutet (C₁-C₆)-Alkyl und

Besonders bevorzugt sind die Fettsäuredialkylamide der Formel (I), worin
R¹ bedeutet Octyl, Decyl, Dodecyl, Tridecyl, Tetradecyl, Hexadecyl, Octadecyl, Octenyl, Decenyl, Dodecenyl, Tridecenyl, Tetradecenyl, Hexadecenyl oder Octadecenyl;
R² bedeutet Wasserstoff, Methyl, Ethyl oder CH₂CH₂OH;
R³ bedeutet Wasserstoff, Methyl, Ethyl oder CH₂CH₂OH.

Die erfindungsgemäßen Pflanzenschutzformulierungen können darüber hinaus auch noch mindestens einen weiteren agrochemischen Wirkstoff aus der Gruppe Herbizide, Fungizide, Insektizide, Safener, Akarizide, Molluskizide, Rodentizide, Adjuvantien und Dünger, bevorzugt Herbizide, enthalten.

In Formel (I) können Alkylreste mit mehr als zwei Kohlenstoffatomen geradkettig oder verzweigt sein. Alkylreste bedeuten z.B. Methyl, Ethyl, n- oder i-Propyl, n-, i-, t- oder 2-Butyl, Pentyle wie n-Pentyl oder verzweigtes Pentyl wie Isopentyl oder Neopentyl, Hexyle, wie n-Hexyl, i-Hexyl und 1,3-Dimethylbutyl. Heptyle wie n-Heptyl oder verzweigtes Heptyl, Octyle wie n-Octyl oder verzweigtes Octyl wie 2-Ethylhexyl, Nonyle wie n-Nonyl oder verzweigtes Nonyl, Decyle wie n-Decyl oder verzweigtes Decyl, Undecyle wie n-Undecyl oder verzweigtes Undecyl, Dodecyle wie n-Dodecyl oder verzweigtes Dodecyl. Halogen steht für Fluor, Chlor, Brom oder Iod.
Ist eine Gruppe mehrfach durch Reste substituiert, so ist darunter zu verstehen, daß diese Gruppe durch ein oder mehrere gleiche oder verschiedene der genannten Reste substituiert ist.

In einer bevorzugten Ausführungsform sind die Alkylreste geradkettig.

Beispiel für Lösungsmittel der Gruppe b) ist Genagen 4166®.

Als Tenside der Gruppe c) kommen dabei polymere und nicht polymere Tenside in Betracht. Die Tenside können nichtionischer, anionischer, kationischer, zwitterionischer Natur sein. Die Tenside können z.B. emulgierend oder dispergierend wirken oder auch benetzende Eigenschaften (Netzmittel) aufzeigen.

In den erfindungsgemäßen Formulierungen enthaltene Tenside der Gruppe c) sind z.B. Tenside auf nichtaromatischer oder heteroaromatischer Basis, z.B. auf Heterocyclen-, Olefin-, Aliphaten- oder Cycloaliphatenbasis, beispielsweise oberflächenaktive mit einer oder mehreren Alkylgruppen substituierte und nachfolgend derivatisierte, z.B. alkoxylierte, Pyridin-, Pyrimidin-, Triazin-, Pyrol-, Pyrolidin-, Furan-, Thiophen-, Benzoxazol-, Benzthiazol- und Triazolverbindungen, und/oder Tenside auf aromatischer Basis, z.B. mit einer oder mehreren Alkylgruppen substituierte und nachfolgend derivatisierte Benzole oder Phenole. Die Tenside c) sind im allgemeinen in der Lösungsmittelphase löslich und geeignet, diese - zusammen mit darin gelösten Wirkstoffen - bei Verdünnung mit Wasser (zur Spritzbrühe) zu emulgieren. Die erfindungsgemäßen Formulierungen können z.B. nicht aromatische oder aromatische Tenside oder Mischungen von nichtaromatischen und aromatischen Tensiden enthalten.

Beispiele für Tenside der Gruppe c) sind nachfolgend aufgeführt, worin EO für Ethylenoxy-Einheiten, PO für Propylenoxy-Einheiten und BO für Butylenoxy-Einheiten stehen:
c1) C₁₀-C₂₄-Alkohole, die alkoxyliert sein können, z.B. mit 1 - 60 Alkylenoxideinheiten, vorzugsweise 1-60 EO und/oder 1-30 PO und/oder 1-15 BO in beliebiger Reihenfolge. Die terminalen Hydroxygruppen dieser Verbindungen können durch einen Alkyl-,Cycloalkyl-oder Acylrest mit 1-24 Kohlenstoffatomenendgruppenverschlossen sein. Beispiele für derartige Verbindungen sind:
   Genapol^{®}C-,L-,O-,T-,UD-,UDD-,X-Produkte von Clariant, Plurafac^{®}- und Lutensol^{®}A-,AT-,ON-,TO-Produkte von BASF, Marlipal^{®}24- und 013 Produkte von Condea, Dehypon^{®}-Produkte von Henkel, Ethylan^{®}-Produkte von Akzo-Nobel wie Ethylan CD 120.
c2) Anionische Derivate der unter b1) beschriebenen Produkte in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis) wie Genapoi^{®}LRO, Sandopan^{®}-Produkte, Hostaphat/Hordaphos^{®}-Produkte von Clariant.
   Copolymere bestehend aus EO,PO und/oder BO Einheiten wie zum Beispiel Blockcopolymere wie die Pluronic^{®}-Produkte von der BASF und die Synperonic^{®}-Produkte von Uniquema mit einem Molekulargewicht von 400 bis 10⁸.
   Alkylenoxydaddukte von C₁ - C₉ Alkoholen wie Atlox^{®}5000 von Uniquema oder Hoe^{®}-S3510 von Clariant.
c3) Fettsäure- und Triglyceridalkoxylate wie die Serdox^{®}NOG-Produkte von Condea oder alkoxylierte Pflanzenöle wie Sojaöl, Rapsöl, Maiskeimöl, Sonnenblumenöl, Baumwollsaatöl, Leinöl, Kokosöl, Palmöl, Distelöl, Walnussöl, Erdnussöl, Olivenöl oder Rhizinusöl, insbesondere Rapsöl, wobei unter den Pflanzenölen auch deren Umesterungsprodukte verstanden werden, z.B. Alkylester wie Rapsölmethylester oder Rapsölethylester, beispielsweise die Emulsogen^{®}-Produkte von Clariant, Salze von aliphatischen,cycloaliphatischen und olefinischen Carbonsäuren und Polycarbonsäuren, sowie Alpha-Sulfofettsäureester wie von Henkel erhältlich.
c4) Fettsäureamidalkoxylate wie die Comperlan^{®}-Produkte von Henkel oder die Amam^{®}-Produkte von Rhodia.
   Alkylenoxydaddukte von Alkindiolen wie die Surfynol^{®}-Produkte von Air Products. Zuckerderivate wie Amino- und Amidozucker von Clariant, Glukitole von Clariant, Alkylpolyglycoside in Form der APG^{®}-Produkte von Henkel oder wie Sorbitanester in Form der Span^{®}- oder Tween^{®}-Produkte von Uniquema oder Cyclodextrinester oder -ether von Wacker.
c5) Oberflächenaktive Cellulose- und Algin-, Pektin- und Guarderivate wie die Tylose^{®}-Produkte von Clariant,die Manutex^{®}-Produkte von Kelco und Guarderivate von Cesalpina.
   Alkylenoxydaddukte auf Polyolbasis wie Polyglykol^{®}-Produkte von Clariant. Grenzflächenaktive Polyglyceride und deren Derivate von Clariant.
c6) Sulfosuccinate , Alkansulfonate, Paraffin- und Olefinsulfonate wie Netzer IS^{®}, Hoe^{®}S1728, Hostapur^{®}OS, Hostapur^{®}SAS von Clariant, Triton^{®}GR7ME und GR5 von Union Carbide, Empimin^{®}-Produkte von Albright und Wilson, Marlon^{®}-PS65 von Condea.
c7) Sulfosuccinamate wie die Aerosol^{®}-Produkte von Cytec oder die Empimin^{®}-Produkte von Albright und Wilson.
c8) Alkylenoxidaddukte von Fettaminen, quartäre Ammonium-Verbindungen mit 8 bis 22 Kohlenstoffatomen (C₈-C₂₂) wie z.B. die Genamin^{®}C,L,O,T-Produkte von Clariant.
c9) Oberflächenaktive, zwitterionische Verbindungen wie Tauride, Betaine und Sulfobetaine in Form von Tegotain^{®}-Produkte von Goldschmidt, Hostapon^{®}T-und Arkopon^{®}T-Produkte von Clariant.
c10) Oberflächenaktive Verbindungen auf Silikon- bzw Silanbasis wie die Tegopren^{®}-Produkte von Goldschmidt und die SE^{®}-Produkte von Wacker, sowie die Bevaloid^{®}- ,Rhodorsil^{®}- und Silcolapse^{®}-Produkte von Rhodia (Dow Corning, Reliance, GE, Bayer).
c11) Per- oder polyfluorierte oberflächenaktive Verbindungen wie Fluowet^{®}-Produkte von Clariant, die Bayowet^{®}-Produkte von Bayer, die Zonyl^{®}-Produkte von DuPont und Produkte dieser Art von Daikin und Asahi Glass.
c12) Grenzflächenaktive Sulfonamide z.B. von Bayer.
c13) Grenzflächenaktive Polyacryl- und Polymethacrylderivate wie die Sokalan^{®}-Produkte von der BASF.
c14) Oberflächenaktive Polyamide wie modifizierte Gelatine oder derivatisierte Polyasparginsäure von Bayer und deren Derivate.
c15) Tensidische Polyvinylverbindungen wie modifiziertes Polyvinylpyrollidon wie die Luviskol^{®}-Produkte von BASF und die Agrimer^{®}-Produkte von ISP oder die derivatisierten Polyvinylacetate wie die Mowilith^{®}-Produkte von Clariant oder die -butyrate wie die Lutonal^{®}-Produkte von der BASF,die Vinnapas^{®}-und die Pioloform^{®}-Produkte von Wacker oder modifizierten Polyvinylalkohole wie die Mowiol^{®}-Produkte von Clariant.
c16) Oberflächenaktive Polymere auf Basis von Maleinsäureanhydrid und/oder Umsetzungsprodukten von Maleinsäureanhydrid, sowie Maleinsäureanhydrid und/oder Umsetzungsprodukte von Maleinsäureanhydrid beinhaltende Copolymere wie die Agrimer^{®}-VEMA-Produkte von ISP.
c17) Oberfächenaktive Derivate von Montan-, Polyethylen-, und Polypropylenwachsen wie die Hoechst^{®}-wachse oder die Licowet^{®}-Produkte von Clariant.
c18) Oberflächenaktive Phosphonate und Phosphinate wie Fluowet^{®}-PL von Clariant.
c19) Poly- oder perhalogenierte Tenside wie beispielsweise Emulsogen^{®}-1557 von Clariant.
c20) Phenole, die alkoxyliert sein können, beispielsweise Phenyl-(C₁-C₄)alkyl-ether oder (poly)alkoxylierte Phenole [= Phenol-(poly)alkylenglykolether], beispielsweise mit 1 bis 50 Alkylenoxy-Einheiten im (Poly)alkylenoxyteil, wobei der Alkylenteil vorzugsweise jeweils 1 bis 4 C-Atome aufweist, vorzugsweise mit 3 bis 10 mol Alkylenoxid umgesetztes Phenol, (Poly)alkylphenole oder (Poly)alkylphenolalkoxylate [= Polyalkylphenol-(poly)alkylenglykolether], beispielsweise mit 1 bis 12 C-Atomen pro Alkylrest und 1 bis 150 Alkylenoxy-Einheiten im Polyalkylenoxyteil, vorzugsweise mit 1 bis 50 mol Ethylenoxid umgesetztes Tri-n-butylphenol oder Triisobutylphenol, Polyarylphenole oder Polyarylphenolalkoxylate [= Polyarylphenol-(poly)alkylenglykolether], beispielsweise Tristyrylphenolpolyalkylenglykolether mit 1 bis 150 Alkylenoxy-Einheiten im Polyalkylenoxyteil, vorzugsweise mit 1 bis 50 mol Ethylenoxid umgesetztes Tristyrylphenol.
c21) Verbindungen, die formal die Umsetzungsprodukte der unter b20) beschriebenen Moleküle mit Schwefelsäure oder Phosphorsäure darstellen und deren mit geeigneten Basen neutralisierte Salze, beispielsweise der saure Phosphorsäureester des dreifach ethoxylierten Phenols, der saure Phosphorsäureester eines mit 9 mol Ethylenoxid umgesetzten Nonylphenols und der mit Triethanolamin neutralisierte Phosphorsäureester des Reaktionsproduktes von 20 mol Ethylenoxid und 1 mol Tristyrylphenol.
c22) Benzolsulfonate wie Alkyl- oder Arylbenzolsulfonate, z.B. saure und mit geeigneten Basen neutralisierte (Poly)alkyl- und (Poly)aryl-benzolsulfonate, beispielsweise mit 1 bis 12 C-Atomen pro Alkylrest bzw. mit bis zu 3 Styroleinheiten im Polyarylrest, vorzugsweise (lineare) Dodecylbenzolsulfonsäure und deren öl-lösliche Salze wie beispielsweise das Calciumsalz oder das lsopropylammoniumsalz der Dodecylbenzolsulfonsäure.

Bei den Alkylenoxy-einheiten sind Ethylenoxy-, Propylenoxy- und Butylenoxyeinheiten, insbesondere Ethylenoxyeinheiten bevorzugt.

Beispiele für Tenside aus der Gruppe der Tenside auf nichtaromatischer Basis sind die Tenside der vorstehend genannten Gruppen c1) bis c19), vorzugsweise der Gruppen c1). c2), c6) und c8).

Beispiele für Tenside aus der Gruppe der Tenside auf Aromatenbasis sind die Tenside der vorstehend genannten Gruppen c20)-c22) vorzugsweise
mit 4 bis 10 mol Ethylenoxid umgesetztes Phenol, kommerziell beispielsweise in Form der Agrisol^{®}-Produkte (Akcros) erhältlich,
mit 4 bis 50 mol Ethylenoxid umgesetztes Triisobutylphenol, kommerziell beispielsweise in Form der Sapogenat^{®} T-Produkte (Clariant) erhältlich,
mit 4 bis 50 mol Ethylenoxid umgesetztes Nonylphenol, kommerziell beispielsweise in Form der Arkopal^{®}-Produkte (Clariant) erhältlich,
mit 4 bis 150 mol Ethylenoxid umgesetztes Tristyrylphenol, beispielsweise aus der Soprophor^{®}-Reihe wie Soprophor^{®} FL, Soprophor^{®} 3D33, Soprophor^{®} BSU, Soprophor^{®} 4D-384, Soprophor^{®} CY/8 (Rhodia), und
saures (lineares) Dodecylbenzolsulfonat, kommerziell beispielsweise in Form der Marlon^{®}-Produkte (Hüls) erhältlich.

Bevorzugte Tenside c) sind z.B. alkoxylierte C₁₀-C₂₄-Alkohole (c1) und deren anionische Derivate c2) wie Sulfate, Sulfonate und Phosphate, alkoxylierte Pflanzenöle c3), alkoxylierte Phenole c20) und deren Umsetzungprodukte mit Schwefelsäure oder Phosphorsäure c21) und Alkylbenzolsulfonate c22).

Als weitere agrochemische Wirkstoffe kommen für die erfindungsgemäßen Formulierungen beispielsweise bekannte Wirkstoffe wie Herbizide, Insektizide oder Fungizide in Frage, wie sie in z.B. Weed Research 26,441-445 (1986), oder "The Pesticide Manual", 12th edition, The British Crop Protection Council, 2000, und dort zitierter Literatur beschrieben sind, z.B. in Mischungsformulierungen oder als TankMischpartner. Als literaturbekannte Herbizide, die in den erfindungsgemäßen herbiziden Mitteln enthalten sein können, sind z.B. folgende Wirkstoffe zu nennen Die Verbindungen sind entweder mit dem "common name" nach der International Organization for Standardization (ISO) oder mit dem chemischen Namen, ggf. zusammen mit einer üblichen Codenummer bezeichnet und umfassen stets sämtliche Anwendungsformen wie Säuren, Salze, Ester und Isomere wie Stereoisomere und optische Isomere: acetochlor; acifluorfen; aclonifen; AKH 7088, d.h. [[[1-[5-[2-Chloro-4-(trifluoromethyl)-phenoxy]-2-nitrophenyl]-2-methoxyethylidene]-amino]-oxy]-essigsäure und -essigsäuremethylester; alachlor; alloxydim; ametryn; amidosulfuron; amitrol; AMS, d.h. Ammoniumsulfamat; anilofos; asulam; atrazin; azafenidine (DPX-R6447), azimsulfurone (DPX-A8947); aziprotryn; barban; BAS 516 H, d.h. 5-Fluor-2-phenyl-4H-3,1-benzoxazin-4-on; benazolin; benfluralin; benfuresate; bensulfuron-methyl; bensulide; bentazone; benzofluor; benzoylprop-ethyl; benzthiazuron; bialaphos; bifenox; bispyribac-natrium (KIH-2023), bromacil; bromobutide; bromofenoxim; bromoxynil, insbesondere bromoxyniloctanoat und bromoxynil-heptanoat; butachlor; butamifos; butenachlor; buthidazole; butralin; butroxydim (ICI-0500), butylate; cafenstrole (CH-900); carbetamide; cafentrazone; CDAA, d.h. 2-Chlor-N,N-di-2-propenylacetamid; CDEC, d.h. Diethyldithiocarbaminsäure-2-chlorallylester; chlomethoxyfen; chloramben; cloransulam-methyl (XDE-565), chlorazifop-butyl, chlorbromuron; chlorbufam; chlorfenac; chlorflurenol-methyl; chloridazon; chlorimuron ethyl; chlornitrofen; chlorotoluron; chloroxuron; chlorpropham; chlorthal-dimethyl; chlorthiamid; cinidonethyl, cinmethylin; cinosulfuron; clethodim; clodinafop und dessen Esterderivate (z.B. clodinafop-propargyl); clomazone; clomeprop; cloproxydim; clopyralid; cumyluron (JC 940); cyanazine; cycloate; cyclosulfamuron (AC 014); cycloxydim; cycluron; cyhalofop und dessen Esterderivate (z.B. Butylester, DEH-112); cyperquat; cyprazine; cyprazole; 2,4-D; 2,4-DB; dalapon; desmedipham; desmetryn; di-allate; dicamba; dichlobenil; dichlorprop; diclofop und dessen Ester wie diclofop-methyl; diclosulam (XDE-564), diethatyl; difenoxuron; difenzoquat; diflufenzopyr-natrium (SAN-835H), dimefuron; dimethachlor; dimethametryn; dimethenamid (SAN-582H); dimidazone, 5-(4,6-Dimethylpyrimidin-2-yl-carbamoylsulfamoyl)-1-(2-pyridyl)-pyrazol-4-carbonsäuremethylester (NC-330); triaziflam (IDH-1105), cinosulfon; dimethipin; dinitramine; dinoseb; dinoterb; diphenamid; dipropetryn; diquat; dithiopyr; diuron; DNOC; eglinazine-ethyl; EL 177, d.h. 5-Cyano-1-(1,1-dimethylethyl)-N-methyl-1H-pyrazole-4-carboxamid; endothal; indanofan (MK-243), EPTC; esprocarb; ethalfluralin; ethametsulfuron-methyl; ethidimuron; ethiozin; ethofumesate; F5231, d.h. N-[2-Chlor-4-fluor-5-[4-(3-fluorpropyl)-4,5-dihydro-5-oxo-1H-tetrazol-1-yl]-phenyl]-ethansulfonamid; ethoxyfen und dessen Ester (z.B. Ethylester, HN-252); ethoxysulfuron (aus EP 342569); etobenzanid (HW 52); 3-(4-Ethoxy-6-ethyl-1,3,5-triazin-2-yl)-1-(2,3-dihydro-1,1-dioxo-2-methylbenzo[b]thiophen-7-sulfonyl)harnstoff (EP-A 079 683);
3-(4-Ethyl-6-methoxy-1,3,5-triazin-2-yl)-1-(2,3-dihydro-1,1-dioxo-2-methylbenzo[b]thiophen-7-sulfonyl)harnstoff (EP-A 079 683); fenoprop; clomazone, fenoxaprop und fenoxaprop-P sowie deren Ester, z.B. fenoxaprop-P-ethyl und fenoxaprop-ethyl; butroxydim; fenuron; flamprop-methyl; flazasulfuron; flufenacet (BAY-FOE-5043), fluazifop und fluazifop-P und deren Ester, z.B. fluazifop-butyl und fluazifop-P-butyl, florasulam (DE-570); fluchloralin; flumetsulam; fluometuron; flumiclorac und dessen Ester (z.B. Pentylester, S-23031); flumioxazin (S-482); flumipropyn; flupoxam (KNW-739); fluorodifen; fluoroglycofenethyl; flupropacil (UBIC-4243); flupyrsulfuron-methyl natrium (DPX-KE459), fluridone; flurochloridone; fluroxypyr; flurtamone; fluthiacet-methyl (KIH-9201), fomesafen; fosamine; furyloxyfen; glufosinate; glyphosate; halosafen; halosulfuron und dessen Ester (z.B. Methylester, NC-319); haloxyfop und dessen Ester; haloxyfop-P (= R-haloxyfop) und dessen Ester; hexazinone; imazamethabenz-methyl; imazamox (AC-299263), imazapyr; imazaquin und Salze wie das Ammoniumsalz; imazapic; imazethapyr; imazosulfuron; iodosulfuron-methyl-natrium (Methyl-4-iod-2-[3-(4-methoxy-6-methyl-1,3,5-triazin-2-yl)ureidosulfonyl]-benzoat, Natriumsalz, WO 92/13845); ioxynil; isocarbamid; isopropalin; isoproturon; isouron; isoxaben; isoxapyrifop; karbutilate; lactofen; lenacil; linuron; MCPA, sowie davon abgeleitete Derivate; MCPB; mecoprop; mefenacet; mefluidid; metamitron; metazachlor; methabenzthiazuron; metam; methazole; methoxyphenone; methyldymron; metobenzuron, mesosulfuron-methyl (WO 95/10507); metobromuron; metolachlor; S-metolachlor, metosulam (XRD 511); metoxuron; metribuzin; maleic hydrazide; molinate; monalide; monocarbamide dihydrogensulfate; monolinuron; monuron; MT 128, d.h. 6-Chlor-N-(3-chlor-2-propenyl)-5-methyl-N-phenyl-3-pyridazinamin; MT 5950, d.h. N-[3-Chlor-4-(1-methylethyl)-phenyl]-2-methylpentanamid; foramsulfuron (WO 95/01344); naproanilide; napropamide; naptalam; NC 310, d.h. 4-(2,4-dichlorbenzoyl)-1-methyl-5-benzyloxypyrazol; neburon; nicosulfuron; nipyraclofen; nitralin; nitrofen; nitrofluorfen; norflurazon; orbencarb; oryzalin; oxadiargyl (RP-020630); oxadiazon; oxaziclomefone (MY-100), oxyfluorfen; oxasulfuron (CGA-277476), paraquat; pebulate; pendimethalin; pentoxazone (KPP-314), perfluidone; phenisopham; phenmedipham; picloram; piperophos; pyributicarb; pirifenop-butyl; pretilachlor; primisulfuron-methyl; procyazine; prodiamine; profluralin; proglinazineethyl; prometon; prometryn; propachlor; propanil; propaquizafop und dessen Ester; propazine; propham; propisochlor; propoxycarbazone-natrium; propyzamide; prosulfalin; prosulfocarb; prosulfuron (CGA-152005); prynachlor; pyraflufen-ethyl (ET-751), chloridazon; pyrazosulfuron-ethyl; pyrazoxyfen; pyribenzoxim, pyridate; pyriminobac-methyl (KIH-6127), pyrithiobac (KIH-2031); pyroxofop und dessen Ester (z.B. Propargylester); quinclorac; quinmerac; quizalofop, quizalofop und quizalofop-P und deren Esterderivate z.B. quizalofop-ethyl; quizalofop-P-tefuryl und -ethyl; rimsulfuron (DPX-E 9636); S 275, d.h. 2-[4-Chlor-2-fluor-5-(2-propynyloxy)-phenyl]-4,5,6,7-tetrahydro-2H-indazol; secbumeton; sethoxydim; siduron; simazine; simetryn; SN 106279, d.h. 2-[[7-[2-Chlor-4-(trifluor-methyl)-phenoxy]-2-naphthalenyl]-oxy]-propansäure und -methylester; flazasulfuron (FMC-97285, F-6285); sulfazuron; sulfometuron-methyl; glyphosate-trimesium (ICI-A0224); sulfosulfuron (MON-37500), TCA; tebutam (GCP-5544); tebuthiuron; tepraloxydim (BAS-620H), terbacil; terbucarb; terbuchlor; terbumeton; terbuthylazine; terbutryn; TFH 450, d.h. N,N-Diethyl-3-[(2-ethyl-6-methylphenyl)-sulfonyl]-1H-1,2,4-triazol-1-carboxamid; thenylchlor (NSK-850); thiazafluron; thiazopyr (Mon-13200); thidiazimin (SN-124085); thiobencarb; tiocarbazil; tralkoxydim; tri-allate; triasulfuron; triazofenamide; triclopyr; tridiphane; trietazine; trifluralin; triflusulfuron und Ester (z.B. Methylester, DPX-66037); trimeturon; tsitodef; vernolate; WL 110547, d.h. 5-Phenoxy-1-[3-(trifluormethyl)-phenyl]-1H-tetrazol; UBH-509; D-489; LS 82-556; KPP-300; KPP-421, MT-146, NC-324; butenachlor (KH-218); DPX-N8189; haloxyfop-etotyl (DOWCO-535); DK-8910; flumioxazin (V-53482); PP-600; MBH-001, amicarbazone, aminopyralid, beflubutamid, benzobicyclon, benzofenap, benzfendizone, butafenacil, chlorfenprop, cloprop, daimuron, dichlorprop-P, dimepipeate, dimethenamid-P, fentrazamide, flamprop-M, fluazolate, flucarbazone, flucetosulfuron, foramsulfuron, indanofan, isoxachlortole, isoxaflutole, MCPAthioethyl, mecoprop-P, mesosulfuron, mesotrione, metamifop, penoxsulam, pethoxamid, picolinafen, profluazol, profoxydim, propoxycarbazone, pyraclonil, pyrazolynate, pyridafol, pyriftalid, sulcotrione, thidiazuron, trifloxysulfuron, tritosulfuron.

Neben den genannten Wirkstoffen sind auch davon abgeleitete Derivate wie z.B. Salze oder Ester, als mögliche Komponenten der erfindungsgemäßen Formulierung anzusehen.

Bevorzugte zusätzlich in der erfindungsgemäßen Formulierung enthaltene Wirkstoffe sind Herbizide, insbesondere Bromoxynil und dessen Derivate wie z.B. Bromoxyniloctanoatester, loxynil und Derivate wie z.B. loxyniloctanoateester, MCPA sowie dessen Derivate wie z.B. MCPA-2-ethylhexylester, oder Mecroprop-p sowie dessen Ester (z.B. 2-Ethylhexylester).

Als nicht polare Lösungsmittel gelten aromatische und aliphatische Kohlenwasserstoffe sowie Ester die einen langkettigen, unpolaren Kohlenwasserstoffrest tragen.
Als Beispiel gelten aromatische Lösungsmittel wie Solvesso 100. Solvesso 200, Solvesso 150, Solvesso 200 ND, Solvesso 150 ND oder auch aromatische Lösungsmittel der Marken Shellsol oder Caromax. Zu den Lösungsmittel n mit einem langkettigen, unpolaren Kohlenwasserstoffrest gehören solche, die in der Regel aus einem Kohlenwasserstoffmolekülfragment mit mindestens 10 Kohlenstoffatomen, die direkt miteinander verknüpft sind, bestehen. Hierzu gehören z.B. natürliche und synthetische Fettsäureester sowie deren Derivate wie Ester. Beispiele hierfür sind Triglyceride sowie Fettsäurealkylester wie z.B. Methyl- oder Ethylester. Bekannte Handelsprodukte sind u.a. Rapsölmethylester (RME).

Als dipolare Lösungsmittel gelten polare, organische Lösungsmittel die eine hohe Wasserlöslichkeit aufzeigen. Es kann sich dabei um dipolar, aprotisches Lösungsmittel oder um dipolare protische Lösungsmittel handeln.
Beispiele hierfür sind
Nitrile wie Acetonitril, Propionitril
Cyclische und offenkettige Ketone wie Cyclohexanon, Cyclopentanon, Benzophenon,
Cyclische und offenkettige Carbonate wie z.B. Butylen-, Propylen- oder Ethylencarbonat, Dibutylcarbonat
Cyclische oder offenkettige Ester wie z.B. Gammabutyrolacton, Propiosäuremethylester
Alkohole wie Propanol, i-Propanol, i-Butanol, n-Butanol, t-Butanol, s-Butanol, Ethanol, Methanol, 2-Hydroxymethyl-tetrahydrofuran.

Als weitere Hilfsstoffe können in den erfindungsgemäßen Formulierungen je nach gewünschtem Anwendungszweck Stoffe wie z.B. Entschäumer, Stickers, Driftkontroll-Agentien, Haftmittel, Verdicker, Antioxidatien, pH-Stabilisatoren (Puffer, kleine Mengen Säueren oder Basen, d.h. in der Regel zwischen 0 und 2%), Sauerstofffänger, Säurefänger, Biozide, andere Lösungsmittel wie z.B. Wasser, Alkohole, organische oder anorganische Salze enthalten sein.
Die verschiedenen handelsüblichen Hilfsstoffe sind dem Fachmann bestens bekannt.

Bevorzugte Ausführungsformen sind wie folgt charakterisert:
a) 0,1 bis 8% Diflufenican in gelöster Form,
b) 1 bis 80% eines Lösungsmittels, das sowohl polare als auch unpolare Gruppen besitzt, oder eines Gemisches aus solchen Lösungsmitteln,
c) 1 bis 30% eines Tensids oder Tensidgemischs,
d) 0 bis 50% eines oder mehreren weiterer agrochemische Wirkstoffe,
e) 0 bis 50% eines unpolaren Lösungsmittels,
f) 0 bis 15% eines dipolaren Lösungsmittels, und
g) 0 bis 20% eines oder mehreren weiterer Hilfsstoffe.

Besonders bevorzugte Ausführungsformen sind wie folgt charakterisert:
a) 0,5 bis 3,5% Diflufenican,
b) 10 bis 35% eines Lösungsmittels, das sowohl polare als auch unpolare Gruppen besitzt, oder eines Gemisches aus solchen Lösungsmitteln,
c) 1 bis 30% eines Tensids oder Tensidgemischs,
d) 15 bis 45% eines oder mehreren weiterer agrochemische Wirkstoffe,
e) 20 bis 50% eines unpolaren Lösungsmittels,
f) 0 bis 15% eines dipolaren Lösungsmittels,
g) 0 bis 20% eines oder mehreren weiterer Hilfsstoffe, und
h) die erfindungsgemäßen Pflanzenschutzformulierungen liegen als Öldispersionen (OD), Mikroemulsionen (ME), Mikroemulsionskonzentrate (MC), Suspoemulsionen (SE), Öl-in-Wasser-Emulsionen (EW) oder emulgierbare Konzentrate (EC) vor.

Ganz besonders bevorzugte Ausführungsformen sind wie folgt charakterisert:
a) 0,5 bis 2% Diflufenican,
b) 10 bis 35% eines Lösungsmittels, das sowohl polare als auch unpolare Gruppen besitzt, oder eines Gemisches aus solchen Lösungsmitteln,
c) 1 bis 30% eines Tensids oder Tensidgemischs,
d) 15 bis 45% eines oder mehreren weiterer agrochemische Wirkstoffe,
e) 20 bis 50% eines unpolaren aromatischen Lösungsmittels,
f) 0 bis 15% eines dipolaren Lösungsmittels,
g) 0 bis 20% eines oder mehreren weiterer Hilfsstoffe,
h) die erfindungsgemäßen Pflanzenschutzformulierungen liegen als MC oder EC, insbesondere EC-Formulierung vor, und
i) die Formulierung wird in Getreide (z.B. Weizen, Gerste) zur Kontrolle von unerwünschtem Pflanzenwuchs eingesetzt.

Eine weitere ganz besonders bevorzugte Ausführungsform ist **dadurch gekennzeichnet, dass** sie wie vorstehend definiert ist, jedoch keinen weiteren agrochemischen Wirkstoff enthält.

Die oben genannten verschiedenen Typen von Formulierungen Mikroemulsionen, Mikroemulsionskonzentrate, Öldispersionen, Suspoemulsionen, Öl-in-Wasser-Emulsionen und emulgierbare Konzentrate sind dem Fachmann grundsätzlich bekannt und können durch bekannte Verfahren hergestellt werden. Ihre Herstellweise ist beispielsweise beschrieben in: Winnacker-Küchler, "Chemische Technologie" Band 7, C. Hauser Verlag München, 4. Aufl. 1986; Wade van Valkenburg, "Pesticide Formulations", Marcel Dekker N.Y., 1973; K. Martens, "Spray Drying Handbook", 3rd Ed. 1979, G. Goodwin Ltd. London.

Die gegebenenfalls notwendigen Formulierungshilfsmittel, wie Inertmaterialien, Tenside, Lösungsmittel und weitere Zusatzstoffe, sind ebenfalls bekannt und beispielsweise beschrieben in: Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Emulgierbare Konzentrate (EC) werden z.B. durch Auflösen des Wirkstoffes z.B. des herbiziden Wirkstoffs und / oder des Safeners in einem organischen Lösungsmittel, wie Butanol, Cyclohexanon, Dimethylformamid, Xylol oder auch höhersiedende Kohlenwasserstoffe wie Aromaten, gesättige oder ungesättigte Aliphaten oder Alicyclen, oder Mischungen der organischen Lösungsmittel unter Zusatz von einem oder mehreren Tensiden ionischer und/oder nichtionischer Art (Emulgatoren) hergestellt. Als Emulgatoren können beispielsweise verwendet werden: (C₆-C₁₈)-Alkylarylsulfonsaure Calzium-Salze, wie Ca-dodecylbenzolsulfonat, oder nichtionisch Emulgatoren, wie Fettsäurepolyglykolester, (C₂-C₁₈)-Alkylarylpolyglykolether, Fettalkoholpolyglykolether, Propylenoxid-Ethylenoxid-Kondensationsprodukte, Alkylpolyether, Sorbitanester, wie Sorbitanfettsäureester, oder Polyoxethylensorbitanester, wie Polyoxyethylensorbitanfettsäureester. Suspensionskonzentrate können auf Ölbasis können beispielsweise durch Naß-Vermahlung mittels handelsüblicher Perlmühlen und gegebenenfalls Zusatz von Tensiden, wie sie z.B. bei den anderen Formulierungstypen bereits aufgeführt sind, hergestellt werden.

Emulsionen, z.B. ÖI-in-Wasser-Emulsionen (EW), lassen sich beispielsweise mittels Rührern, Kolloidmühlen und/oder statischen Mischern unter Verwendung von wäßrigen organischen Lösungsmitteln und gegebenenfalls Tensiden, wie sie z.B. bei den anderen Formulierungstypen bereits aufgeführt sind, herstellen.
Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Die erfindungsgemäßen Formulierungen zeigen im Vergleich zu handelsüblichen Produkten ein signifikant verbessertes Applikationsverhalten, das sich in deutlich erniedrigten Siebrückständen bzw. Sieb- oder Düsenverstopfungen bemerkbar macht.
Die Aufwandmenge der erfindungsgemäßen Formulierungen pro Hektar schwankt im allgemeinen zwischen 0,5 und 5 Litern, bevorzugt zwischen 1,0 und 4,0 Litern.

Zur Anwendung können die erfindungsgemäßen Formulierungen gegebenenfalls in üblicher Weise, z.B. zu Suspensionen, Emulsionen, Suspoemulsionen oder Lösungen, vorzugsweise Emulsionen, verdünnt werden, z.B. mittels Wasser. Es kann vorteilhaft sein, erhaltenen Spritzbrühen weitere agrochemische Wirkstoffe (z.B. Tankmischpartner in Form entsprechender Formulierungen) und/oder zur Anwendung übliche Hilfs- und Zusatzstoffe, z.B. selbstemulgierende Öle wie Pflanzenöle oder Paraffinöle und/oder Düngemittel zuzugeben. Gegenstand der vorliegenden Erfindung sind daher auch die auf solche Weise hergestellten herbiziden Mittel.

Üblicherweise beträgt das Verhältnis erfindungsgemäße Formulierung zu Wasser 1:500 bis 1:50. Die Spritzbrühe pro ha beträgt üblicherweise 50 bis 500 Liter, vorzugsweise 75 bis 350 Ltr Wasser. In einigen Fällen können die hier angegebenen Grenzwerte auch unter- bzw. überschritten waren.
Die Formulierungen sind auch für eine Flugzeugapplikation geeignet. Hierzu werden erfindungsgemäße Formulierungen entweder unverdünnt, verdünnt mit Wasser oder mit organischen Lösungsmitteln ausgebracht. Das Volumen an zusätzlicher Trägerflüssigkeit schwankt dabei in der Regel von 0,5 bis 50 Ltr pro Hektar.

Als Tankmischungspartner werden beispielsweise Isoproturon-basierte Formulierungen, sowie insbesondere Graminicide Produkte für die Nachauflaufapplikation- z.B. Aryloxyphenoxyesssigsäuredreivate, wie Fenoxaprop-p-ethyl, Diclofop-methyl, oder Clodinafop-propargyl, oder auch Sulfonylharnstoffe, wie z.B. Meso- oder lodosulfuron basierte Produkte genutzt. Die daraus resultierenden Spritzbrühen sind neue, herbizide Mittel, die ebenfalls Gegenstand dieser Erfindung sind.

Diese erfindungsgemäßen herbiziden Mittel weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden gut erfaßt. Dabei können die Mittel z.B. im Vorsaat-, Vorauflauf- oder Nachauflaufverfahren ausgebracht werden.

Die erfindungsgemäßen Pflanzenschutzformulierungen eignen je nach Art des weiteren agrochemischen Wirkstoffs d) zur Bekämpfung von unerwünschten Pflanzen, Insekten, Spinnmilben, Schnecken und anderen Schadorganismen, insbesondere von unerwünschten Pflanzen. Ein weiterer Gegenstand vorliegender Erfindung ist somit ein Verfahren zur Bekämpfung von Schadorganismen, wobei man eine wirksame Menge einer erfindungsgemäßen Pflanzenschutzformulierung auf die Schadorganismen oder die Orte, an denen sie auftreten, appliziert.
Ein weiterer Gegenstand vorliegender Erfindung ist somit auch die Verwendung von flüssigen Pflanzenschutzformulierungen zur Bekämpfung von Schadorganismen, insbesondere von unerwünschten Pflanzen.

### Formutierungsbeispiele

Zur Herstellung der in Tabelle 1 genannten Beispiele wird zunächst das Lösungsmittel (die Lösungsmittel) vorgelegt. Unter Rühren werden anschließend Diflufenican sowie die weiteren Rezepturbestandteile zugesetzt. Die Reihenfolge der Zugabe der weiteren Komponenten spielt in der Regel keine Rolle.

Beispiel 8 ist ein zu Vergleichszwecken hergestelltes nicht erfindungsgemäßes Beispiel.

**Tabelle 1 (Angaben erfolgen in Gewichtsprozent)**

| **Komponente** | | **Beispiel Nr.** | | | | | | | | |
|---|---|---|---|---|---|---|---|---|---|---|
| | | **1** | **2** | **3** | **4** | **5** | **6** | **7** | **8** | **9** |
| a | Diflufenican | 0,81 | 0,61 | 1,84 | 2,76 | 1,38 | 1,21 | 1,21 | 1,96 | 1,96 |
| b | Genagen® 4166 | 17,47 | 19,15 | 17,17 | 31,14 | | 49,81 | 24,90 | | 20,00 |
| b | Agsolex® 8 | | | | | | | | 20,00 | |
| b | Cyclohexanon | 13,10 | 14,35 | 12,90 | | | | | 15,00 | 15,00 |
| b | Propylencarbonat | | | | | 15,03 | | | | |
| b | 2-Ethylhexylacetat | | | | 31,14 | 62,10 | | 24,91 | | |
| c | Soprophor® BSU | | | | | | 4,44 | 4,44 | | |
| c | Sapogenate® T 080 | | | | 8,02 | 8,02 | | | | |
| c | Emulsogen® EL360 | 6,12 | 6,71 | 6,01 | | | | | 7,00 | 7,00 |
| c | Phenylsulfonate Ca 70 | 2,62 | 2,88 | 2,58 | | | 4,12 | 4,12 | 3,00 | 3,00 |
| d | Bromoxyniloctanoat | 9,80 | 7,35 | | | | 14,70 | 14,70 | 8,92 | 8,92 |
| d | Ioxyniloctanoat | | | | | | | | 4,93 | 4,93 |
| d | Mecroprop-p-isooctylester | 17,15 | 12,86 | | | | 25,72 | 25,72 | | |
| d | MCPA-isooctylester | | | 17,96 | 26,94 | 13,47 | | | | |
| d | Solvesso® 200 ND | 32,93 | 36,09 | 41,54 | | | | | 39,19 | 39,19 |
| Gesamt: | | 100 | 100 | 100 | 100 | 100 | 100 | 100 | 100 | 100 |

Bei den hier in den Beispielen verwendeten Handelsprodukten handelt es sich um Produkte folgender Zusammensetzung:
First®: Emulgierbares Konzentrat einer Dichte von 1,105 g/ml enthaltend Diflufenican, Bromoxyniloctonat, loxyniloctonat,N-Methyl-pyrrolidon, Solvesso 150 und Nonylphenolethoxylat.
Genagen® 4166: Fettsäuredialkylamide der Formel (I), worin R² und R³ jeweils Methyl bedeuten, und R¹ für C₈- und C₁₀-Alkyl steht.
Agsolex® 8: N-Octyl-2-pyrrolidinon.
Soprophor® BSU: 2,4,6-Tristyrolphenolethoxylat mit 16 Ethylenoxy-Einheiten.
Sapögenate® T 080: 2,4,6-Tri-sec-butylphenolethoxylat mit 8 Ethylenoxy-Einheiten.
Emulsogen® EL360: Ethoxyliertes Rhizinusöl mit 36 Ethylenoxy-Einheiten.
Solvesso® 200 ND: Gemisch von Aromaten.

### Applikationsbeispiele

### Erfindungsgemäßes Beispiel:

Aus 2 ml des erfindungsgemäßen Beispiels 9 aus Tabelle 1 und 250 ml Wasser wird eine Spritzbrühe angesetzt. Nach 2 Stunden Rühren bei 10°C wird die Spritzbrühe über ein Sieb (Maschenweite 0,15 mm) filtriert. Es werden keine Rückstände beobachtet.

### Vergleichsbeispiel:

Aus 1 ml der kommerziell erhältlichen Formulierung First® und 251 ml Wasser wird eine Spritzbrühe angesetzt. Nach 2 Stunden Rühren bei 10°C wird die Spritzbrühe über ein Sieb (Maschenweite 0,15 mm) filtriert. Nach Trocknung werden signifikante Mengen an Diflufenican auf dem Sieb gefunden.

### Biologisches Beispiel

Das erfindungsgemäße Beispiel 9 der Tabelle 1 (1 ,5 Ltr/ha) wird im Vergleich zum Handelsprodukt First® (0,75 Ltr/ha) zur Bekämpung von Unkräutern in Weizen appliziert. Anschließend erfolgt die Beurteilung zu unterschiedlichen Zeitpunkten. Dabei zeigt sich, dass die erfindungsgemäße Formulierung 9 aus Tabelle 1 bei vergleichbarer Selektivität eine verbesserte Unkrautbekämpfung ermöglicht als das Handelsprodukt First®; insbesondere wird das schwer bekämpfbare Galium besser kontrolliert.

### Biologische Beispiele

Die Schadwirkung an den Pflanzen wird auf einer Skala von 0 bis 100 % optische im Vergleich zu Kontrollpflanzen bewertet:

| | | |
|---|---|---|
| 0 % | = | keine erkennbare Wirkung im Vergleich zur unbehandelten Pflanze, |
| 100 % | = | behandelte Pflanze stirbt ab |

### Herbizidwirkung im Nachauflauf

Samen von mono-und dikotylen Unkräutern und von Kulturpflanzen werden in Plastiktöpfen in sandigem Lehmboden ausgelegt, mit Erde abgedeckt und im Gewächshaus unter guten Wachstumsbedingungen angezogen. Drei Wochen nach der Aussaat werden die Versuchspflanzen im 3-4 Blattstadium behandelt. Die als Emulsionskonzentrate formulierten erfindungsgemäßen Einzelwirkstoffe werden in verschiedenen Dosierungen mit einer Wasseraufwandmengen von umgerechnet 300 I/ha einzeln oder als Mischungen auf die grünen Pflanzenteile gesprüht und nach 3 Wochen Standzeit der Versuchspflanzen im Gewächshaus unter optimalen Wachstumsbedingungen wird die Wirkung der Präparate optisch im Vergleich zu unbehandelten Kontrollen bonitiert. Wie die Beispiele zeigen, sind die erfindungsgemäßen Kombinationen aus Sulfonylharnstoffen und Safenern in der Lage, ein breites Spektrum von Unkräutern nachhaltig zu bekämpfen, wobei Schäden an Kulturpflanzen im Vergleich zur Anwendung der einzelnen Sulfonylharnstoffe ohne Safener wesentlich reduziert sind.

## Patentansprüche

1. Flüssige Pflanzenschutzformulierung enthaltend
a) 0,1 bis 8% Diflufenican in gelöster Form,
b) 1 bis 80% eines Lösungsmittels aus der Gruppe der Fettsäuredialkylamide der Formel (I), 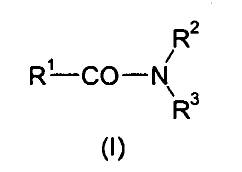 worin
R¹ bedeutet jeweils durch k Reste aus der Gruppe Hydroxy und CO₂-(C₁-C₄)-Alkyl substituiertes (C₆-C₃₂)-Alkyl, (C₆-C₃₂)-Alkenyl oder (C₆-C₃₂)-Alkinyl;
R² bedeutet Wasserstoff oder jeweils durch k Reste aus der Gruppe Hydroxy und CO₂-(C₁-C₄)-Alkyl substituiertes (C₁-C₂₀)-Alkyl, (C₂-C₂₀)-Alkenyl oder (C₂-C₂₀)-Alkinyl;
k bedeutet 0, 1, 2 oder 3;
R³ bedeutet Wasserstoff oder jeweils durch k Reste aus der Gruppe Hydroxy und CO₂-(C₁-C₄)-Alkyl substituiertes (C₁-C₂₀)-Alkyl, (C₂-C₂₀)-Alkenyl oder (C₂-C₂₀)-Alkinyl;
c) 1 bis 30% eines Tensids oder Tensidgemischs,
d) 0 bis 70% eines oder mehreren weiterer agrochemische Wirkstoffe,
e) 0 bis 50% eines unpolaren Lösungsmittels,
f) 0 bis 15% eines dipolaren Lösungsmittels, und
g) 0 bis 20% eines oder mehreren weiterer Hilfsstoffe.

2. Flüssige Pflanzenschutzformulierung nach Anspruch 1, worin
R¹ bedeutet (C₆-C₂₀)-Alkyl, (C₆-C₂₀)-Alkenyl oder (C₆-C₂₀)-Alkinyl;
R² bedeutet Wasserstoff, (C₁-C₆)-Alkyl, CH₂CH₂OH oder durch den Rest CO₂R⁷ einfach substituiertes (C₁-C₄)-Alkyl;
R³ bedeutet Wasserstoff, (C₁-C₆)-Alkyl, CH₂CH₂OH oder durch den Rest CO₂R⁷ einfach substituiertes (C₁-C₄)-Alkyl, und
R⁷ bedeutet (C₁-C₆)-Alkyl.

3. Flüssige Pflanzenschutzformulierung nach Anspruch 1 oder 2, worin
R¹ bedeutet Octyl, Decyl, Dodecyl, Tridecyl, Tetradecyl, Hexadecyl, Octadecyl, Octenyl, Decenyl, Dodecenyl, Tridecenyl, Tetradecenyl, Hexadecenyl oder Octadecenyl;
R² bedeutet Wasserstoff, Methyl, Ethyl oder CH₂CH₂OH;
R³ bedeutet Wasserstoff, Methyl, Ethyl oder CH₂CH₂OH.

4. Flüssige Pflanzenschutzformulierung nach einem der Ansprüche 1 bis 3, worin die Tenside c) aus der Gruppe der alkoxylierten C₁₀-C₂₄-Alkohole und deren anionische Derivate, alkoxylierten Pflanzenöle, alkoxylierten Phenole und deren Umsetzungprodukte mit Schwefelsäure oder Phosphorsäure sowie Alkylbenzolsulfonäten stammen.

5. Flüssige Pflanzenschutzformulierung nach einem der Ansprüche 1 bis 4, enthaltend
a) 0,1% bis 8% Diflufenican in gelöster Form,
b) 1 bis 80% eines Lösungsmittels aus der Gruppe der Fettsäuredialkylamide der Formel (I),
c) 1 bis 30% eines Tensids oder Tensidgemischs,
d) 0 bis 50% eines oder mehreren weiterer agrochemische Wirkstoffe,
e) 0 bis 50% eines unpolaren Lösungsmittels,
f) 0 bis 15% eines dipolaren Lösungsmittels,
g) 0 bis 20% eines oder mehreren weiterer Hilfsstoffe,

6. Flüssige Pflanzenschutzformulierung nach einem der Ansprüche 1 bis 5, enthaltend
a) 0,5 bis 3,5% Diflufenican,
b) 10 bis 35% eines Lösungsmittels aus der Gruppe der Fettsäuredialkylamide der Formel (I),
c) 1 bis 30% eines Tensids oder Tensidgemischs,
d) 15 bis 45% eines oder mehreren weiterer agrochemische Wirkstoffe,
e) 20 bis 50% eines unpolaren Lösungsmittels,
f) 0 bis 15% eines dipolaren Lösungsmittels,
g) 0 bis 20% eines oder mehreren weiterer Hilfsstoffe, und darüber hinaus **dadurch gekennzeichne, dass**
h) die erfindungsgemäßen Pflanzenschutzformulierungen als Öldispersionen (OD), Mikroemulsionen (ME), Mikroemulsionskonzentrate (MC), Suspoemulsionen (SE), Öl-in-Wasser-Emulsionen (EW) oder emulgierbare Konzentrate (EC) vorliegen.

7. Flüssige Pflanzenschutzformulierung nach einem der Ansprüche 1 bis 6, enthaltend
a) 0,5 bis 2% Diflufenican,
b) 10 bis 35% eines Lösungsmittels aus der Gruppe der Fettsäuredialkylamide der Formel (I),
c) 1 bis, 30% eines Tensids oder Tensidgemischs,
d) 15% bis 45% eines oder mehreren weiterer agrochemische Wirkstoffe,
e) 20 bis 50% eines unpolaren aromatischen Lösungsmittels,
f) 0 bis 15% eines dipolaren Lösungsmittels,
g) 0 bis 20% eines oder mehreren weiterer Hilfsstoffe, und darüber hinaus **dadurch gekennzeichne, dass**
h) die erfindungsgemäßen Pflanzenschutzformulierungen als MC oder EC, insbesondere EC-Formulierung vorliegen, und
i) die Formulierung in Getreide (z.B. Weizen, Gerste) zur Kontrolle von unerwünschtem Pflanzenwuchs eingesetzt wird.

8. Flüssige Pflanzenschutzformulierung nach einem der Ansprüche 1 bis 7, enthaltend einen oder mehrere weitere agrochemische Wirkstoffe aus der Gruppe Herbizide, Fungizide, Insektizide, Safener, Akarizide, Molluskizide, Rodentizide, Adjuvantien und Dünger.

9. Flüssige Pflanzenschutzformulierung nach einem der Ansprüche 1 bis 8, enthaltend einen oder mehrere weitere herbizide Wirkstoffe.

10. Flüssige Pflanzenschutzformulierung nach einem der Ansprüche 1 bis 9, enthaltend einen oder mehrere Wirkstoffe aus der Gruppe Bromoxynil, loxynil, MCPA und Mecroprop-p sowie jeweils deren Derivate.

11. Verfahren zur Bekämpfung von Schadorganismen, wobei man eine wirksame Menge einer flüssigen Pflanzenschutzformulierung gemäß einem oder mehreren der Ansprüche 1 bis 10 auf die Schadorganismen oder die Orte, an denen sie auftreten, appliziert.

12. Verfahren nach Anspruch 11 zur Bekämpfung von unerwünschten Pflanzen.

13. Verwendung von flüssigen Pflanzenschutzformulierungen gemäß einem oder mehreren der Ansprüche 1 bis 12 zur Bekämpfung von Schadorganismen.

14. Verwendung nach Anspruch 13 zur Bekämpfung von unerwünschten Pflanzen.

## Claims

1. A liquid plant protection formulation, which comprises
a) 0.1 to 8% of diflufenican in dissolved form,
b) 1 to 80% of a solvent from the group of the fatty acid dialkyl amides of the formula (I), 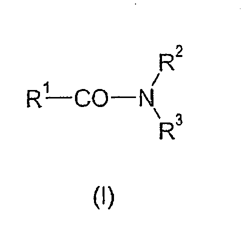 in which
R¹ is (C₆-C₃₂)-alkyl, (C₆-C₃₂)-alkenyl or (C₆-C₃₂)-alkynyl each substituted by k radicals from the group consisting of hydroxyl and CO₂-(C₁-C₄)-alkyl;
R² is hydrogen or (C₁-C₂₀)-alkyl, (C₂-C₂₀)-alkenyl or (C₂-C₂₀)-alkynyl each substituted by k radicals from the group consisting of hydroxyl and CO₂-(Cₗ-C₄)-alkyl;
k is 0, 1, 2, or 3;
R³ is hydrogen or (C₁-C₂₀)-alkyl, (C₂-C₂₀)-alkenyl or (C₂-C₂₀)-alkynyl each substituted by k radicals from the group consisting of hydroxyl and CO₂-(C₁-C₄)-alkyl;
c) 1 to 30% of a surfactant or surfactant mixture,
d) 0 to 70% of one or more additional agrochemical active substances,
e) 0 to 50% of a nonpolar solvent,
f) 0 to 15% of a dipolar solvent, and
g) 0 to 20% of one or more additional auxiliaries.

2. The liquid plant protection formulation as claimed in claim 1, wherein
R¹ is (C₆-C₂₀)-alkyl, (C₆-C₂₀)-alkenyl or (C₆-C₂₀)-alkynyl;
R² is hydrogen, (C₁-C₆)-alkyl, CH₂CH₂OH or (C₁-C₄)-alkyl monosubstituted by the radical CO₂R⁷;
R³ is hydrogen, (C₁-C₆)-alkyl, CH₂CH₂OH or (C₁-C₄)-alkyl monosubstituted by the radical CO₂R⁷, and
R⁷ is (C₁-C₆)-alkyl.

3. The liquid plant protection formulation as claimed in claim 1 or 2, wherein
R¹ is octyl, decyl, dodecyl, tridecyl, tetradecyl, hexadecyl, octadecyl, octenyl, decenyl, dodecenyl, tridecenyl, tetradecenyl, hexadecenyl or octadecenyl;
R² is hydrogen, methyl, ethyl or CH₂CH₂OH;
R³ is hydrogen, methyl, ethyl or CH₂CH₂OH.

4. The liquid plant protection formulation as claimed in one of claims 1 to 3, wherein the surfactants c) come from the group of the alkoxylated C₁₀-C₂₄-alcohols and the anionic derivatives thereof, alkoxylated vegetable oils, alkoxylated phenols and the reaction products thereof with sulfuric acid or phosphoric acid, and also alkylbenzenesulfonates.

5. The liquid plant protection formulation as claimed in one of claims 1 to 4, which comprises
a) 0.1 to 8% of diflufenican in dissolved form,
b) 1 to 80% of a solvent from the group of the fatty acid dialkyl amides of the formula (I),
c) 1 to 30% of a surfactant or surfactant mixture,
d) 0 to 50% of one or more additional agrochemical active substances,
e) 0 to 50% of a nonpolar solvent,
f) 0 to 15% of a dipolar solvent,
g) 0 to 20% of one or more additional auxiliaries.

6. The liquid plant protection formulation as claimed in one of claims 1 to 5, which comprises
a) 0.5 to 3.5% of diflufenican,
b) 10 to 35% of a solvent from the group of the fatty acid dialkyl amides of the formula (I),
c) 1 to 30% of a surfactant or surfactant mixture,
d) 15 to 45% of one or more additional agrochemical active substances,
e) 20 to 50% of a nonpolar solvent,
f) 0 to 15% of a dipolar solvent,
g) 0 to 20% of one or more additional auxiliaries, and which, additionally,
h) exists as oil dispersions (OD), microemulsions (ME), microemulsion concentrates (MC), suspoemulsions (SE), oil-in-water emulsions (EW) or emulsifiable concentrates (EC).

7. The liquid plant protection formulation as claimed in one of claims 1 to 6, which comprises
a) 0.5 to 2% of diflufenican,
b) 10 to 35% of a solvent from the group of the fatty acid dialkyl amides of the formula (I),
c) 1 to 30% of a surfactant or surfactant mixture,
d) 15 to 45% of one or more additional agrochemical active substances,
e) 20 to 50% of a nonpolar aromatic solvent,
f) 0 to 15% of a dipolar solvent,
g) 0 to 20% of one or more additional auxiliaries, and which, additionally,
h) exists as an MC or EC formulation, in particular as an EC formulation, and
i) is used on cereals (e.g., wheat, barley) for the control of undesirable plant growth.

8. The liquid plant protection formulation as claimed in one of claims 1 to 7, which comprises one or more additional agrochemical active substances from the group consisting of herbicides, fungicides, insecticides, safeners, acaricides, molluscicides, rodenticides, adjuvants and fertilizers.

9. The liquid plant protection formulation as claimed in one of claims 1 to 8, which comprises one or more additional herbicidal active substances.

10. The liquid plant protection formulation as claimed in one of claims 1 to 9, which comprises one or more active substances from the group consisting of bromoxynil, ioxynil, MCPA and mecoprop-P, and in each case the derivatives thereof.

11. A process for the combating of harmful organisms, in which an effective amount of a liquid plant protection formulation as claimed in one or more of claims 1 to 10 is applied to the harmful organisms or the places where they occur.

12. The process as claimed in claim 11 for the combating of undesirable plants.

13. The use of the liquid plant protection formulation as claimed in one or more of claims 1 to 12 for the combating of harmful organisms.

14. The use as claimed in claim 13 for the combating of undesirable plants.

## Revendications

1. Formulation liquide pour la protection de plantes contenant
a) de 0,1 à 8 % de diflufénican dans une forme dissoute,
b) de 1 à 80 % d'un solvant du groupe des dialkylamides d'acides gras de la formule (I) 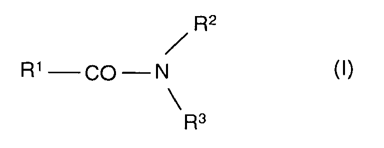 dans laquelle
R¹ représente à chaque fois un groupe alkyle en C₆-C₃₂, alcényle en C₆-C₃₂ ou alcynyle en C₆-C₃₂ substitué à chaque fois par k restes du groupe constitué des groupes hydroxy et CO₂-(alkyle en C₁-C₄) ;
R² représente l'hydrogène ou un groupe alkyle en C₁-C₂₀, alcényle en C₂-C₂₀ ou alcynyle en C₂-C₂₀ substitué à chaque fois par k restes du groupe constitué des groupes hydroxy et CO₂-(alkyle en C₁-C₄) ;
k représente 0, 1, 2 ou 3 ;
R³ représente l'hydrogène ou un groupe alkyle en C₁-C₂₀, alcényle en C₂-C₂₀ ou alcynyle en C₂-C₂₀ à chaque fois substitué par k restes du groupe constitué des groupes hydroxy et CO₂-(alkyle en C₁-C₄) ;
c) de 1 à 30 % d'un tensioactif ou d'un mélange de tensioactifs,
d) de 0 à 70 % d'un ou plusieurs autres principes actifs agrochimiques,
e) de 0 à 50 % d'un solvant non polaire,
f) de 0 à 15 % d'un solvant dipolaire, et
g) de 0 à 20 % d'un ou plusieurs autres auxiliaires.

2. Formulation liquide pour la protection de plantes selon la revendication 1, dans laquelle
R¹ représente un groupe alkyle en C₆-C₂₀, alcényle en C₆-C₂₀ ou alcynyle en C₆-C₂₀ ;
R² représente l'hydrogène, un groupe alkyle en C₁-C₆, CH₂CH₂OH ou alkyle en C₁-C₄ substitué une fois par le reste CO₂R⁷;
R³ représente l'hydrogène, un groupe alkyle en C₁-C₆, CH₂CH₂OH ou alkyle en C₁-C₄ substitué une fois par le reste CO₂R⁷, et
R⁷ représente un groupe alkyle en C₁-C₆.

3. Formulation liquide pour la protection de plantes selon la revendication 1 ou 2, dans laquelle
R¹ représente un groupe octyle, décyle, dodécyle, tridécyle, tétradécyle, hexadécyle, octadécyle, octényle, décényle, dodécényle, tridécényle, tétradécényle, hexadécényle ou octadécényle ;
R² représente l'hydrogène, un groupe méthyle, éthyle ou CH₂CH₂OH ;
R³ représente l'hydrogène, un groupe méthyle, éthyle ou CH₂CH₂OH.

4. Formulation liquide pour la protection de plantes selon l'une quelconque des revendications 1 à 3, dans laquelle les tensioactifs c) proviennent du groupe des alcools en C₁₀-C₂₄ alcoxylés et de leurs dérivés anioniques, d'huiles végétales alcoxylées, de phénols alcoxylés et de leurs produits de réaction avec de l'acide sulfurique ou de l'acide phosphorique ainsi que de sulfonates d'alkylbenzène.

5. Formulation liquide pour la protection de plantes selon l'une quelconque des revendications 1 à 4 contenant
a) de 0,1 à 8 % de diflufénican dans une forme dissoute,
b) de 1 à 80 % d'un solvant du groupe des dialkylamides d'acides gras de la formule (I),
c) de 1 à 30 % d'un tensioactif ou d'un mélange de tensioactifs,
d) de 0 à 50 % d'un ou plusieurs autres principes actifs agrochimiques,
e) de 0 à 50 % d'un solvant non polaire,
f) de 0 à 15 % d'un solvant dipolaire,
g) de 0 à 20 % d'un ou plusieurs autres auxiliaires.

6. Formulation liquide pour la protection de plantes selon l'une quelconque des revendications 1 à 5 contenant
a) de 0,5 à 3,5 % de diflufénican,
b) de 10 à 35 % d'un solvant du groupe des dialkylamides d'acides gras de la formule (I),
c) de 1 à 30 % d'un tensioactif ou d'un mélange de tensioactifs,
d) de 15 à 45 % d'un ou plusieurs autres principes actifs agrochimiques,
e) de 20 à 50 % d'un solvant non polaire,
f) de 0 à 15 % d'un solvant dipolaire,
g) de 0 à 20 % d'un ou plusieurs autres auxiliaires,
et **caractérisée de plus en ce que**
h) les formulations pour la protection de plantes selon l'invention sont présentes dans la forme de dispersions huileuses (OD), de microémulsions (ME), de concentrés de microémulsions (MC), de suspoémulsions (SE), d'émulsions huile-dans-eau (EW) ou de concentrés émulsionnables (EC).

7. Formulation liquide pour la protection de plantes selon l'une quelconque des revendications 1 à 6 contenant
a) de 0,5 à 2 % de diflufénican,
b) de 10 à 35 % d'un solvant du groupe des dialkylamides d'acides gras de la formule (I),
c) de 1 à 30 % d'un tensioactif ou d'un mélange de tensioactifs,
d) de 15 à 45 % d'un ou plusieurs autres principes actifs agrochimiques,
e) de 20 à 50 % d'un solvant aromatique non polaire,
f) de 0 à 15 % d'un solvant dipolaire,
g) de 0 à 20 % d'un ou plusieurs autres auxiliaires,
et **caractérisée de plus en ce que**
h) les formulations pour la protection de plantes selon l'invention sont présentes dans la forme de formulations MC ou EC, particulièrement EC, et
i) on utilise la formulation dans des céréales (par exemple blé, orge) pour le contrôle de la croissance de plantes non souhaitées.

8. Formulation liquide pour la protection de plantes selon l'une quelconque des revendications 1 à 7 contenant un ou plusieurs autres principes actifs agrochimiques du groupe des herbicides, des fongicides, des insecticides, des safeners, des acaricides, des molluscicides, des rodenticides, des adjuvants et des engrais.

9. Formulation liquide pour la protection de plantes selon l'une quelconque des revendications 1 à 8 contenant un ou plusieurs autres principes actifs herbicides.

10. Formulation liquide pour la protection de plantes selon l'une quelconque des revendications 1 à 9 contenant un ou plusieurs principes actifs du groupe constitué du bromoxynil, de l'ioxynil, de MCPA et de mécropop-p ainsi que de chacun de leurs dérivés.

11. Procédé pour combattre des organismes nocifs, dans lequel on applique une quantité efficace d'une formulation liquide pour la protection de plantes selon l'une ou plusieurs quelconques des revendications 1 à 10 aux organismes nocifs ou aux endroits auxquels ils apparaissent.

12. Procédé selon la revendication 11 pour combattre des plantes non souhaitées.

13. Utilisation de formulations liquides pour la protection de plantes selon l'une ou plusieurs quelconques des revendications 1 à 12 pour combattre des organismes nocifs.

14. Utilisation selon la revendication 13 pour combattre des plantes non souhaitées.
